(19) **Europäisches Patentamt / European Patent Office / Office européen des brevets**

(11) **EP 1 604 897 B1**

(12) **FASCICULE DE BREVET EUROPEEN**

(45) Date de publication et mention
de la délivrance du brevet:
**13.08.2008 Bulletin 2008/33**

(51) Int Cl.:
***B64C 27/00*** *(2006.01)*

(21) Numéro de dépôt: **05011892.6**

(22) Date de dépôt: **02.06.2005**

(54) **Dispositif d'indication d'un niveau de battement**

Einrichtung zur Anzeige des Niveaus des Rotorblattschlages

Device for indicating the level of flapping

(84) Etats contractants désignés:
**CH GB IT LI**

(30) Priorité: **10.06.2004 FR 0406275**

(43) Date de publication de la demande:
**14.12.2005 Bulletin 2005/50**

(73) Titulaire: **EUROCOPTER**
**13725 Marignane Cédex (FR)**

(72) Inventeur: **Aubourg, Pierre-Antoine**
**13006 Marseille (FR)**

(74) Mandataire: **Pouillot, Laurent Pierre Paul et al**
**GPI & Associes**
**EuroParc de Pichaury - Bât D1**
**1330, Rue Guillibert de la Lauzière**
**13856 Aix en Provence Cedex 3 (FR)**

(56) Documents cités:
**EP-A- 0 601 527       FR-A1- 2 692 668**
**FR-A1- 2 824 394       US-A- 4 519 743**
**US-A- 5 316 240       US-B1- 6 311 924**

**Description**

La présente invention concerne un aéronef à voilure tournante comportant un dispositif d'indication d'un niveau de battement.

Le domaine de l'invention est celui de l'analyse des vibrations au sein d'un appareil, plus particulièrement lorsque celui-ci est pourvu d'un moteur entraînant un organe de propulsion rotatif. Un exemple type d'application de l'invention est l'hélicoptère, appareil qui présente un niveau vibratoire important essentiellement dû au rotor principal chargé d'assurer la sustentation et la mobilité.

Il est important de caractériser les vibrations présentes dans un tel appareil car celles-ci sont le signe de contraintes qui provoquent un phénomène de fatigue des différents matériaux et qui ont donc une influence directe sur la sécurité. Les vibrations peuvent également dégrader les performances de divers équipements qui sont installés dans l'appareil. En outre, les vibrations dans la cabine d'un hélicoptère conditionnent le confort des passagers et du pilote. Il va sans dire que le confort du pilote est également un élément essentiel de la sécurité.

On connaît ainsi un système d'enregistrement en continu des vibrations au sein de l'hélicoptère, système connu sous le sigle HUMS (pour « Heath Usage Monitoring System » en anglais). Le système enregistre une alarme dans une cartouche de surveillance amovible si le niveau vibratoire excède un seuil prédéterminé à une fréquence identifiée $\Omega$, $2\Omega$ ou $B\Omega$, $\Omega$ représentant la vitesse de rotation du rotor et B le nombre de pales montées sur ce rotor.

Un autre système connu est décrit dans le document US-A-5 316 240.

Il est par ailleurs connu d'équilibrer un rotor dans ie but de réduire les vibrations dans la cabine sur chacune des harmoniques de la fréquence fondamentale $\Omega$, à l'exception de l'harmonique B.

Toutefois, à ce jour, aucun moyen n'est prévu pour fournir une indication du niveau vibratoire qui ne soit pas limitée à une fréquence identifiée mais qui plutôt prenne en compte le comportement global du rotor.

La présente invention comporte un dispositif qui indique un niveau vibratoire permettant d'appréhender un défaut d'équilibrage qui ne peut être décelé par une simple analyse fréquentielle.

En premier lieu, le niveau de battement est un symptôme d'une anomalie sur un ou plusieurs organes mobiles du rotor, par exemple une pale, une bielle de commande de pas, un amortisseur ou un adaptateur, une articulation (roulement ou butée lamifiée).

En second lieu, ce battement induit une sensation de balourd virtuel en cabine, ce qui est particulièrement inconfortable pour l'équipage et les passagers de l'hélicoptère.

Il s'ensuit que l'indication du niveau de battement est une donnée fondamentale quant à la maintenance de l'appareil.

Selon l'invention, le niveau de battement est égal au rapport de la puissance nième d'un de ces signaux d'accélération à l'autre signal d'accélération.

Avantageusement, la valeur de n est égale à 2.

Suivant une caractéristique additionnelle du dispositif, le signal d'évaluation est issu d'un capteur de vibrations.

Par ailleurs, dans un exemple de réalisation, le dispositif comprend un organe de concentration pour produire le signal d'évaluation en réponse à une pluralité de signaux de mesure chacun issu d'un capteur de vibration distinct.

Selon une première option, le signal d'évaluation vaut la somme des signaux de mesure.

Selon une deuxième option, le signal d'évaluation est le plus élevé de ces signaux de mesure.

En outre, la fréquence de référence est issue d'un capteur de vitesse de rotation.

L'invention s'applique de manière particulièrement avantageuse à un hélicoptère, auquel cas la vitesse de rotation est celle du rotor principal et le coefficient d'harmonique est égal au nombre de pales de ce rotor.

Selon l'invention, il est proposé un aéronef avec les caractéristiques de la revendication 1.

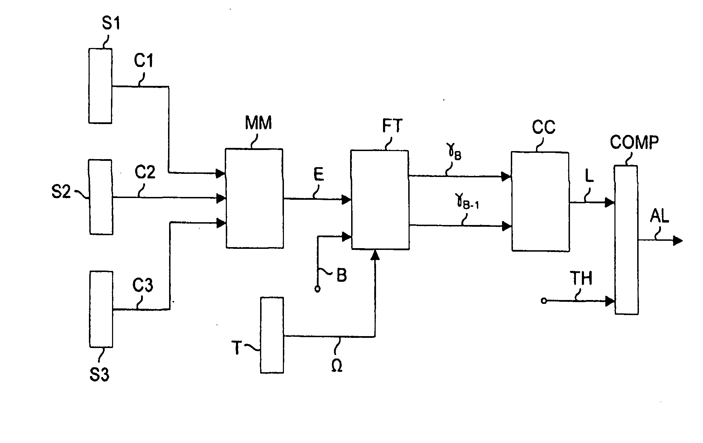

La présente invention apparaîtra maintenant avec plus de détails dans le cadre de la description qui suit d'un exemple de réalisation donné à titre illustratif en se référant à l'unique figure annexée qui représente un schéma du dispositif.

En référence à la figure, un premier S1, un deuxième S2 et un troisième S3 capteurs sont disposés dans la cabine d'un hélicoptère pour mesurer les vibrations. Ces trois capteurs délivrent respectivement un premier C1, un deuxième C2 et un troisième C3 signaux de mesure qui représentent l'accélération à laquelle ils sont soumis. Les capteurs sont de préférence des accéléromètres ou des jauges de contrainte.

Un organe de concentration MM reçoit les trois signaux de mesure C1, C2, C3 pour les combiner (selon une fonction) en un signal d'évaluation E.

Selon une première option, il effectue la somme de ces signaux de mesure.

Selon une deuxième option, il reproduit en tant que signal d'évaluation le signal de mesure qui est le plus élevé.

Il convient de noter que l'invention s'applique également si un seul capteur est prévu, auquel cas celui-ci délivre directement le signal d'évaluation E et l'organe de concentration MM est supprimé.

Un compte-tour T délivre la vitesse de rotation $\Omega$ du rotor principal de l'hélicoptère.

Un moyen d'analyse FT effectue la transposition du signal d'évaluation E du domaine temporel dans le domaine fréquentiel. Il accède à la vitesse de rotation du rotor $\Omega$ et au nombre de pales B de ce rotor pour produire un premier signal d'accélération $\gamma_B$ qui représente la norme (composante spectrale) du signal d'évaluation à la fréquence B*Ω, le signe « * » figurant la multiplication.

Il produit de même un deuxième signal d'accélération $\gamma_{B-1}$ qui représente la norme du signal d'évaluation à la fréquence $(B-1)*\Omega$.

Il apparaît ainsi que le nombre de pales B représente en fait un coefficient d'harmonique.

Un circuit de contrôle CC reçoit les deux signaux d'accélération $\gamma_B$, $\gamma_{B-1}$ pour produire un niveau de battement L fonction de ces signaux.

Selon l'invention, ce niveau de battement vaut

$$ L = [(\gamma_{B-1})^n] / \gamma_B $$

La puissance de n est avantageusement égale à 2 mais l'invention s'applique quelle que soit la valeur de n. En effet, ce qui importe est de mesurer l'écart entre une puissance nième de l'un des signaux accélération et l'autre signal accélération.

Avantageusement, le dispositif comporte de plus un comparateur COMP qui produit un signal d'alerte AL si le niveau de battement L excède un seuil prédéterminé TH.

Naturellement, la présente invention est sujette à de nombreuses variations quant à sa mise en oeuvre. Bien qu'un mode de réalisation ait été décrit, on comprend bien qu'il n'est pas concevable d'identifier de manière exhaustive tous les modes possibles.

**Revendications**

1. Aéronef à voilure tournante comportant un rotor à plusieurs pales, ledit aéronef étant muni d'un dispositif d'indication d'un niveau vibratoire (L), le dispositif comportant :

> - au moins un capteur (S1, S2, S3) de vibration pour mesurer des vibrations de l'aéronef ;
> - un capteur (T) de vitesse pour mesurer la vitesse de rotation du rotor, délivrant un signal de référence présentant une fréquence de référence ($\Omega$),
> - un moyen (FT) d'analyse synchrone de composantes harmoniques d'un signal vibratoire (E) d'évaluation issu du capteur de vibration, le moyen (FT) d'analyse synchrone étant relié au capteur de vibration et au capteur de vitesse, le moyen (FT) d'analyse synchrone étant conçu et agencé pour extraire du signal vibratoire (E):
>
>> o i) une première composante harmonique ($Y_B$) dont la fréquence ($B\Omega$) est égale au produit de ladite fréquence de référence ($\Omega$) par un coefficient d'harmonique (B) égal au nombre de pales du rotor, et

>> o ii) une seconde composante harmonique $Y_{B-1}$ dont la fréquence $((B-1)\Omega)$ est égale au produit de ladite fréquence de référence ($\Omega$) par ledit coefficient d'harmonique B diminué de l'unité ;

**Caractérisé par**

> - un circuit (CC) de contrôle qui est relié au moyen (FT) d'analyse synchrone et qui reçoit en entrée lesdites première et seconde composantes harmoniques et:délivre en sortie le niveau vibratoire (L), ledit niveau vibratoire étant égal au rapport de la puissance nième de la seconde composante harmonique $(\gamma_{B-1})$ à la première composante harmonique $(\gamma_B)$.

2. Aéronef selon la revendication 1, **caractérisé en ce que** ledit dispositif comporte de plus un comparateur (COMP) qui produit un signal d'alerte (AL) si le niveau vibratoire (L) excède un seuil prédéterminé (TH)

3. Aéronef selon l'une quelconque des revendications précédentes, **caractérisé en ce que** la valeur de n est égale à 2.

4. Aéronef selon l'une quelconque des revendications 1 à 3, **caractérisé en ce que** ledit dispositif comprend un organe de concentration (MM) pour produire ledit signal vibratoire d'évaluation (E) en réponse à une pluralité de signaux de mesure (C1, C2, C3) chacun issu d'un capteur de vibration distinct (S1, S2, S3).

5. Aéronef selon la revendication 4, **caractérisé en ce que** ledit signal vibratoire d'évaluation (E) vaut la somme desdits signaux de mesure (C1, C2; C3).

6. Aéronef selon la revendication 4, **caractérisé en ce que** ledit signal vibratoire d'évaluation (E)est le plus élevé desdits signaux de mesure (C1, C2, C3).

**Claims**

1. A rotary wing aircraft including a rotor having a plurality of blades, the said aircraft being equipped with a device for indicating a vibration level (L), the device including:

> - at least one vibration sensor (S1, S2, S3) for measuring vibrations of the aircraft;
> - a speed sensor (T) for measuring the speed of rotation of the rotor, which supplies a reference signal having a reference frequency ($\Omega$);

- a means (FT) for the synchronous analysis of harmonic components of a vibration signal (E) for evaluation which is output by the vibration sensor, the means (FT) for synchronous analysis being linked to the vibration sensor and the speed sensor, the means (FT) for synchronous analysis being designed and arranged to isolate from the vibration signal (E):

• i) a first harmonic component ($\gamma_B$) whereof the frequency (B$\Omega$) is equal to the product of the said reference frequency ($\Omega$) and a harmonic coefficient (B) equal to the number of blades of the rotor, and
• ii) a second harmonic component $\gamma_{B-1}$ whereof the frequency ((B-1)$\Omega$) is equal to the product of the said reference frequency ($\Omega$) and the said harmonic coefficient B minus one;

**characterised by**

- a control circuit (CC) which is linked to the means (FT) for synchronous analysis and which receives at its input the said first and second harmonic components and supplies at its output the vibration level (L), the said vibration level being equal to the ratio of the nth power of the second harmonic component ($\gamma_{B-1}$) to the first harmonic component ($\gamma_B$).

**2.** An aircraft according to Claim 1, **characterised in that** the said device further includes a comparator (COMP) which produces an alarm signal (AL) if the vibration level (L) exceeds a predetermined threshold (TH).

**3.** An aircraft according to either of the preceding claims, **characterised in that** the value of n is 2.

**4.** An aircraft according to any one of Claims 1 to 3, **characterised in that** the said device includes a concentration member (MM) for producing the said vibration signal (E) for evaluation in response to a plurality of measurement signals (C1, C2, C3) each output by a separate vibration sensor (S1, S2, S3).

**5.** An aircraft according to Claim 4, **characterised in that** the value of the said vibration signal (E) for evaluation is the sum of the said measurement signals (C1, C2, C3).

**6.** An aircraft according to Claim 4, **characterised in that** the value of the said vibration signal (E) for evaluation is that of the largest of the said measurement signals (C1, C2, C3).

**Patentansprüche**

**1.** Drehflügel-Luftfahrzeug, das einen Rotor mit mehreren Blättern aufweist, wobei das Luftfahrzeug mit einer Vorrichtung zur Anzeige eines Schwingungspegels (L) ausgestattet ist, wobei die Vorrichtung aufweist:

- mindestens einen Schwingungssensor (S1, S2, S3), um Schwingungen des Luftfahrzeugs zu messen;
- einen Geschwindigkeitssensor (T), um die Drehgeschwindigkeit des Rotors zu messen, der ein Bezugssignal liefert, das eine Bezugsfrequenz ($\Omega$) hat,
- ein Mittel (FT) zur synchronen Analyse von Harmonischen eines Auswertungs-Schwingungssignals (E), das vom Schwingungssensor stammt, wobei das Mittel (FT) zur synchronen Analyse mit dem Schwingungssensor und mit dem Geschwindigkeitssensor verbunden ist, wobei das Mittel (FT) zur synchronen Analyse konzipiert und eingerichtet ist, um aus dem Schwingungssignal (E) zu entnehmen:

o i) eine erste Harmonische ($\gamma_B$), deren Frequenz (B$\Omega$) gleich dem Produkt aus der Bezugsfrequenz ($\Omega$) und einem Harmonischenkoeffizienten (B) gleich der Anzahl von Blätter des Rotors ist, und
o ii) eine zweite Harmonische ($\gamma_{B-1}$), deren Frequenz ((B-1)$\Omega$) gleich dem Produkt aus der Bezugsfrequenz ($\Omega$) und dem Harmonischenkoeffizienten (B) verringert um eine Einheit ist;

**gekennzeichnet durch**
- eine Kontrollschaltung (CC), die mit dem Mittel (FT) zur synchronen Analyse verbunden ist und die am Eingang die erste und die zweite Harmonische empfängt und am Ausgang den Schwingungspegel (L) liefert, wobei der Schwingungspegel gleich dem Verhältnis zwischen der n-ten Potenz der zweiten Harmonischen ($\gamma_{B-1}$) und der ersten Harmonischen ($\gamma_B$) ist.

**2.** Luftfahrzeug nach Anspruch 1, **dadurch gekennzeichnet, dass** die Vorrichtung außerdem einen Komparator (COMP) aufweist, der ein Alarmsignal (AL) erzeugt, wenn der Schwingungspegel (L) eine vorbestimmte Schwelle (TH) überschreitet.

**3.** Luftfahrzeug nach einem der vorhergehenden Ansprüche, **dadurch gekennzeichnet, dass** der Wert von n gleich 2 ist.

**4.** Luftfahrzeug nach einem der Ansprüche 1 bis 3, **dadurch gekennzeichnet, dass** die Vorrichtung ein Konzentrationsorgan (MM) aufweist, um das Auswertungs-Schwingungssignal (E) als Reaktion auf mehrere Messsignale (C1, C2, C3) zu erzeugen, die je von einem anderen Schwingungssensor (S1, S2, S3) stammen.

5. Luftfahrzeug nach Anspruch 4, **dadurch gekennzeichnet, dass** das Auswertungs-Schwingungssignal (E) gleich der Summe der Messsignale (C1, C2, C3) ist.

6. Luftfahrzeug nach Anspruch 4, **dadurch gekennzeichnet, dass** das Auswertungs-Schwingungssignal (E) das höchste der Messsignale (C1, C2, C3) ist.

EP 1 604 897 B1

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 5316240 A